(19) Europäisches Patentamt
European Patent Office
Office européen des brevets

(11) Publication number: **0 427 312 A1**

(12) **EUROPEAN PATENT APPLICATION**

(21) Application number: 90202846.3

(22) Date of filing: 25.10.90

(51) Int. Cl.⁵: **A23D 7/00**

(30) Priority: 08.11.89 GB 8925248

(43) Date of publication of application:
15.05.91 Bulletin 91/20

(84) Designated Contracting States:
AT BE CH DE DK ES FR GB GR IT LI NL SE

(71) Applicant: **UNILEVER NV**
**Burgemeester s'Jacobplein 1 P.O. Box 760**
**NL-3000 DK Rotterdam(NL)**
(84) **BE CH DE DK ES FR GR IT LI NL SE AT**

Applicant: **UNILEVER PLC**
**Unilever House Blackfriars P.O. Box 68**
**London EC4P 4BQ(GB)**
(84) **GB**

(72) Inventor: **Cornelissen, Cornelis Antonius**
**UNILEVER Research Lab., Olivier van**
**Noortlaan 120**
**Vlaardingen(NL)**
Inventor: **van den Oever, Christiaan Evert**
**UNILEVER Research Lab., Olivier van**
**Noortlaan 120**
**Vlaardingen(NL)**

(74) Representative: **Mulder, Cornelis Willem**
**Reinier, Dr. et al**
**UNILEVER N.V. Patent Division P.O. Box 137**
**NL-3130 AC Vlaardingen(NL)**

(54) **Spread.**

(57) The present invention is concerned with a spread comprising less than 30 wt.% of a continuous fat phase containing less than 35 % saturated fatty acid residues and at least 70 wt.% of an aqueous phase containing a gelling amount of edible gelling agent, which spread contains 0.5 to 7.0 % by weight of the fat phase of an emulsifier selected from the group consisting of monoglycerides, diglycerides and mixture thereof, said emulsifier having a iodine value of at least 40.

Due to the unique formulation of the present spread, conditions of overworking in the preparation of said spread are effectively be averted.

# SPREAD

The present invention is concerned with a spread of very low fat content. In particular the present invention relates to a spread containing less than 30 wt.% of a continuous fat phase and at least 70 wt.% of an aqueous phase containing a gelling amount of edible gelling agent.

In the preparation of spreads of very low fat content it is often difficult to avoid so called overworking of the oil-and-water emulsion, which phenomenon is believed to result from rapid crystallization of the fat blend under the processing conditions employed. We have found now that conditions of overworking can effectively be averted by using a relatively low melting emulsifier in combination with a fat blend containing a relatively low level of saturated fatty acid residues.

Accordingly the present invention is concerned with a spread comprising less than 30 wt.% of a continuous fat phase containing less than 35 % saturated fatty acid residues and at least 70 wt.% of an aqueous phase containing a gelling amount of edible gelling agent, which spread contains 0.5 to 7.0 % by weight of the fat phase of an emulsifier selected from the group consisting of monoglycerides, diglycerides and mixture thereof, said emulsifier having a iodine value of at least 40.

The iodine value of a monoglyceride or diglyceride emulsifier is a measure of the extent of unsaturation of such emulsifiers. This value is defined as the number of parts by weight of iodine which can combine with 100 parts by weight of fat. Generally relatively low melting emulsifiers have high iodine values.

Although we do not wish to be bound by theory, it is believed that during preparation of the present spread which normally involves rapid cooling in scraped surface heat exchangers, the relatively highly unsaturated emulsifier acts as a crystallization inhibitor and thus retards crystallization. As generally oils containing relatively high levels of saturated fatty acid residues crystallize more rapidly than oils containing low levels of such fatty acid residues, it is beneficial to utilize a fat phase containing a limited amount of saturated fatty acid residues and to adapt the emulsifier content to the saturated fatty acid residue content, e.g. to employ relatively high levels of emulsifier in the preparation of spreads containing relatively high levels saturated fatty acid residues.

Due to the emulsifying properties of the mono-and/or diglycerides, the concentration levels employed cannot be varied freely. If the concentration level employed is too low, no fat-continuous spread can be obtained, whereas too high levels of emulsifier will result in a product which does not invert in the mouth and which therefore gives an unacceptable oral response. Since the magnitude of the iodine value of the present emulsifier was found to be positively correlated with its effectiveness as a crystal growth inhibitor, according to a preferred embodiment of the invention the ratio of the iodine value of the emulsifier to the saturated fatty acid residue content (in % of total fatty acid residues in triglyceride fat) is at least 2.2. More preferably the latter ratio is in the range of 2.5 to 20.

The mono- and/or diglyceride content of the present spread generally is in the range of 0.7 to 5.5 % by weight of the fat phase. Preferably the mono- and/or diglyceride content is in the range of 1.0 to 5.0 % by weight of the fat phase. Generally the total of emulsifier content of the fat phase does not exceed 5.0 wt.%, preferably the total emulsifer content does not exceed 4.5 wt.%. The present product, preferably, does not contain emulsifiers of the polyglycerol ester type.

In this specification, unless otherwise indicated, the term 'fat' refers to edible fatty substances in a general sense, including natural or synthesized fats and oils consisting essentially of triglycerides such as, for example, soybean oil, sunflower oil, palm oil, coconut oil, fish oil, lard and tallow, which may have been partially or completely hydrogenated, fractionated, interesterified or modified otherwise, as well as non-toxic fatty materials having properties similar to triglycerides, which materials may be indigestible, such as for example waxes, e.g. jojoba oil and hydrogenated jojoba oil, and polyol fatty acid polyesters. Throughout this application the terms fat and oil are deemed synonymous and used interchangeably.

The fat phase of the present spread besides emulsifier may comprise several ingredients such as colouring agents, flavourings and vitamins. The aqueous phase in addition to the gelling agent may comprise various ingredients such as flavouring, preservatives, thickening agents, food grade acids, milk protein, soya protein etc.

We have found that very low fat spreads of exceptional good quality can be obtained if the fat phase contains less than 25 % saturated fatty acid residues. Preferably the fat phase contains less than 15 % saturated fatty acid residues. Throughout this document the % of saturated fatty acid residues is calculated on the total number of fatty acid residues present in the fat phase.

The presence of at most a limited amount of saturated fatty acid residues is deemed beneficial as the consumption of relatively large amounts of such fatty acid residues is believed to increase the cholesterol content of the blood and may thus promote the risk of heart and vascular diseases. According to a very preferred embodiment of the present invention the present spread contains less than 10 wt.% saturated fatty acid residues.

As the ingestion of, particularly, polyunsaturated fatty acid residues is believed to help to reduce the blood cholesterol level, according to a preferred embodiment the fat phase contains more than 30 % polyunsaturated fatty acid residues. More preferably the ratio of polyunsaturated to saturated fatty acid residues in the present spread exceeds 2.0.

Due to the relatively low content of saturated fatty acid residues in the present spread, the fat phase of said spread comprises only a limited amount of high melting triglycerides. Consequently the fat phase of the present spread normally has an $N_5$-value of less than 25, preferably of less than 20. The N-value for a fat or a fat phase composition at a certain temperature t is indicated as $N_t$ and indicates the equilibrium solid fat content of the composition at that temperature t, expressed in % of the weight of that composition. It can conveniently be measured by means of NMR, as described in Fette, Seifen, Anstrichmittel 80 (1978), 180-186. The present spreads containing such a fat phase having a relatively low $N_5$-value are found to be relatively quick melting in the mouth and are easily spreadable even when taken directly from the refrigerator.

As the benefits of the present invention are particularly appreciated in spreads containing a highly unsaturated mono- and/or diglyceride emulsifier, preferably, said emulsifier has an iodine value of more than 55, more preferably of more than 70. Generally the iodine value does not exceed 110. According to another preferred embodiment the emulsifier used in accordance with the present invention is monoglyceride.

In a preferred embodiment of the present invention the spread comprises 10-28 wt.% of a continuous fat phase and 90-72 wt.% of an aqueous phase. Mor preferably the spread contains 15-25 wt.% of a continuous fat phase and 85-75 wt.% of an aqueous phase containing a gelling amount of edible gelling agent. By the phrase "a gelling amount of edible gelling agent" is meant that one or more edible gelling agents are present at a concentration level that exceeds the critical concentration for these gelling agents in said aqueous phase composition.

The critical concentration of a gelling agent is the concentration level at which said gelling agent will start forming a gel. The critical concentration of the gelling agent(s) in the aqueous phase of the present dispersion is determined in an aqueous system which has exactly the same composition as said aqueous phase; with the exception of the water content and the concentration of gelling agent(s) which have to be varied to establish the critical concentration.

The critical concentration of a gelling agent or a mixture of gelling agents in a particular composition can be calculated from measurements of the shear modulus of a series of samples containing different concentrations of gelling agent or mixture of gelling agents, as described in Br. Polymer J. 17 (1985), 164. If the critical concentration of a combination of gelling agents is to be determined, then the critical concentration of such mixture of gelling agents is determined in a manner analogous to the procedure described above. The composition of the mixture of gelling agents is kept constant and the weight concentration of said mixture is varied as if it consisted of only one single gelling agent.

In spreads having a very low fat content, the product properties are highly dependent on the composition of the aqueous phase. In particular the gelling agents have a crucial effect on the emulsion stability, in-mouth break down characteristics and spreadability of very low fat spreads. According to a preferred embodiment of the present invention the gelling agent is selected from the group consisting of gelatin, kappa-carrageenan, iota-carrageenan, alginate, agar, gellan, pectin, starch, whey protein, sodium caseinate, soy protein, microcrystalline cellulose, gelling blends of locust bean gum and xanthan gum and mixtures thereof. Locust bean gum and xanthan gum, as such, are non-gelling thickeners. Mixtures of locust bean gum and xanthan gum, however, are capable of forming gels and are therefore encompassed by the present invention. According to a very preferred embodiment the gelling agent is selected from the group consisting of gelatin, carrageenan, native starch, hydrolyzed starch and mixtures thereof.

Most preferably the aqueous phase of the present spread comprises 1.0 to 5.0 wt.% gelatin and a starch ingredient selected from the group consisting of 1.0 to 6.0 wt.% native intact starch, 3.0 to 14.0 wt.% hydrolyzed starch and 1.0 to 14.0 wt.% of mixtures of native intact starch and hydrolyzed starch.

The present invention encompasses spreads containing a continuous fat phase and an aqueous phase which may be either continuous or discontinuous. Preferably the present spread is an water-in-oil dispersion, i.e. preferably the aqueous phase of the present spread is composed of dispersed water droplets. It is to be understood that the term water-in-oil dispersion also encompasses dispersions of the duplex type wherein the dispersed aqueous phase contains a dispersed fat phase. Fat-continuous spreads containing a dispersed aqueous phase are characterized by a very low conductivity.

The spread according to the present invention may suitably be prepared by means of processing equipment well known in the art of spread manufacture. Examples of apparatus that can be used in the manufacture of the present spread are scraped surface heat exchangers (Votators ™), crystallizers (C-units), resting tubes, cavity transfer mixers, static mixers, resting tubes, pressure valves and static heat exchangers such as cooling coils.

The present spread may be prepared by a process including the inversion of a water-continuous emulsion to a fat-continuous dispersion as well as by a process in which a fat-continuous emulsion is formed upon admixing the aqueous phase composition with the fat blend prior to passing the emulsion so formed through the production line.

The present invention is further illustrated by means of the following example:

Example 1

A spread of very low fat content (20 wt.%) was prepared of the following ingredients (in % by weight of total product):

| Fat phase | wt.% |
|---|---|
| Soybean oil | 14.5 |
| Rape-seed oil | 1.3 |
| Rape seed oil hardened to a slip melting point of 32° C | 1.3 |
| Interesterified blend (60:40) of palm oil (hardened to a slip melting point of 58° C) and palm kernel oil (hardened to a slip melting point of 39° C) | 1.3 |
| Soybean oil hardened to a slip melting point of 35° C | 1.0 |
| Dimodan CPT ™ (90% monoglyceride) * | 0.6 |
| Beta carotene and flavour | |
| Aqueous phase | |
| Paselli SA2 ™ (Hydrolyzed starch) | 9.0 |
| Gelatin 250 Bloom | 3.0 |
| Salt | 0.3 |
| Potassium sorbate | 0.12 |
| Water to 100% | |
| lactic acid to a pH of 4.8 | |

* Iodine value of approximately 80.

The above fat phase had a saturated fatty acid residue content of about 25%.

The spread was prepared by first separately preparing the aqueous phase composition and fat phase composition and then feeding the two compositions in separate streams (both having a temperature of 40-45° C) via a proportioning pump to the production line. In the proportioning pump the fat blend and aqueous phase composition were combined in a weight ratio of 1:4. From the proportioning pump the emulsion was fed, at a throughput of 80 kg/hr, through three scraped surface heat exchangers, followed by a C-unit, after which the fat-continuous product obtained, was filled into tubs. The pH of the aqueous phase was determined and found to be 5.0.

The exit temperature of the emulsion from the third heat exchanger was 9° C. After the C-unit the emulsion had reached a temperature of 17° C. The C-unit was operated at 700 rpm, the scraped surface heat exchangers at 1000 rpm.

The spread thus obtained was easy spreadable, did not show water loss on spreading, had an acceptable mouthfeel and was stable under storage conditions. The Stevens hardness of the product measured as 5, 10, 15 and 20° C was found to be 37, 31, 23 and 16.

The Stevens hardness at a particular temperature is determined by measuring the force (in grams) exerted by a sample when it is penetrated by a bar probe over a pre-set distance. The instrument used for such measurement is a Stevens-LFRA Texture Analyser provided with a stainless steel cylindrical probe having a diameter of 4.4 mm. The pretreatment of the samples includes tempering of said samples at a temperature of 15° C during 3 days, followed by tempering at 20° C for 24 hours. The penetration measurement should be carried out on a sample of relatively large volume (i.e. a sample of at least 100 gram).

The analytical instrument should be operated in its "Normal" mode using a penetration depth of 10 mm and a penetration rate of 2.0 mm/s. The penetration measurements should not be made within 2 cm of the sample's edge nor within 2.5 cm of each other. The Stevens hardness is obtained by calculating the mean figure for three penetration measurements.

Example 2

A fat-continuous spread containing 20 wt.% of fat was prepared of the following ingredients:

| Fat phase | wt.% |
|---|---|
| Interesterified blend (57:43) of palm oil (hardened to a slip melting point of 58° C) and palm kernel oil (hardened to a slip melting point of 39° C) | 1.6 |
| Rape seed oil | 18.0 |
| Hymono 7804 ™ (monoglyceride) * | 0.4 |
| Beta carotene and flavour | |
| Aqueous phase | |
| Kappa carrageenan X 6960 + | 0.8 |
| Salt | 1.5 |
| Lactic acid to a pH of 5.2 | |
| Water to 100% | |

* Iodine value is about 90
+ ex Copenhagen Pectin Factory, Copenhagen, Denmark

The above fat phase had a saturated fatty acid residue content slightly below 15%.

The product was prepared by feeding the above fat phase and aqueous phase in a weight ratio of 1:4 through a sequence of two C-units provided with cooling jackets (at 50 g/min.). The shaft speed of the two C-units was 1400 rpm. The exit temperature of the emulsion directly after the first C-unit was 25° C, after the second C-unit it was 18° C. The product so obtained was very good in terms of spreadability and did not show water on spreading or storage. The hardness of the product at 5° C, measured as the $C_5$-value, was found to be 200 g/cm$^3$. The method for determining the C-values is described in Journal of American Oil Chemists' Society 36 (1959), p. 345.

Example 3

Example 2 was repeated while using the following fat phase and aqueous phase:

| Fat phase | wt.% |
|---|---|
| Interesterified blend (57:43) of palm oil (hardened to a slip melting point of 58° C) and palm kernel oil (hardened to a slip melting point of 39° C) | 1.6 |
| Rape seed oil | 18.1 |
| Hymono 4404 ™ (monoglyceride) * | 0.3 |
| Beta carotene and flavour | |
| Aqueous phase | |
| Paselli SA2 ™ (Hydrolyzed starch) | 8.0 |
| Gelatin 250 Bloom | 2.4 |
| Salt | 1.5 |
| Potassium sorbate | 0.16 |
| Water to 100% | |

The above fat phase had a saturated fatty acid residue content of about 15%.

The processing conditions applied were identical to those mentioned in Example 2, with the exception that the first C-unit was operated at 5500 rpm. The product obtained was comparable with the product described in Example 2.

**Claims**

1. Spread comprising less than 30 wt.% of a continuous fat phase containing less than 35 % saturated fatty acid residues and at least 70 wt.% of an aqueous phase containing a gelling amount of edible gelling agent, which spread contains 0.5 to 7.0 % by weight of the fat phase of an emulsifier selected from the group consisting of monoglycerides, diglycerides and mixture thereof, said emulsifier having a iodine value of at least 40.

2. Spread according to claim 1, wherein the ratio of the iodine value to the saturated fatty acid residue content is at least 2.4.

3. Spread according to claim 1 or 2, wherein the fat phase contains less than 25 % saturated fatty acid residues, preferably less than 15 % saturated fatty acid residues.

4. Spread according to any one of claims 1-3, wherein the emulsifier has an iodine value of more than 55, preferably of more than 70.

5. Spread according to any one of claims 1-4, wherein the fat phase has an $N_5$-value of less than 25.

6. Spread according to any one of claims 1-5, wherein the emulsifier is monoglyceride.

7. Spread according to any one of claims 1-6, wherein the aqueous phase contains a gelling agent selected from the group consisting of: gelatin, carrageenan, native starch, hydrolyzed starch, casein, whey protein, soya protein and mixtures thereof.

8. Spread according to claim 7, wherein the gelling agent is selected from the group consisting of: gelatin, carrageenan, native starch, hydrolyzed starch and mixtures thereof.

9. Spread according to any one of claims 1-8, wherein the fat phase contains more than 30 % polyunsaturated fatty acid residues.

10. Spread according to any one of claims 1-9, wherein the spread is a water-in-oil dispersion.

European Patent Office

**EUROPEAN SEARCH REPORT**

Application Number

**EP 90 20 2846**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X,Y | EP-A-0 237 120 (UNILEVER) <br> * claims 1, 8-14, 17 * * page 5, lines 1 - 18 * * examples 1, 2, 9 * | 1,5-8,10, 2-4,9 | A 23 <br> D 7/00 |
| Y | EP-A-0 327 288 (GOODMAN FIELDER INDUSTRIES) <br> * claims 1, 5, 7 * * page 1, lines 16 - 20 * * page 1, line 53 - page 2, line 19 * * examples 4-6 * | 2-4,9 | |
| A | FOOD SCIENCE <br> & TECHNOLOGY ABSTRACTS, 1989, AN No 90033592,INTERNATIONAL FOOD INFORMATION SERVICE; J.MADSEN, "Pea Protein in Low Fat Spread" <br> & RESEARCH DISCLOSURE, No 299, p.179-180, 1989 <br> * abstract * | 1,4 | |
| A | M.W.FORMO: "BAILEY'S INDUSTRIAL OIL AND FAT PRODUCTS VOL.1" <br> & SONS, USA <br> * pages 356, 378, 383, 390, 394, 416, 430 * | 1,3 | |
| A,A | EP-A-0 279 498 (UNILEVER) <br> * claim 1 * * example 1 * * tables 4, 6 * | 1,4,6 | TECHNICAL FIELDS SEARCHED (Int. Cl.5) |
| A | EP-A-0 049 705 (SCM CORPORATION) <br> * claims 1, 5, 7 * * page 6, line 30 - page 7, line 14 * * page 8, lines 10 - 19 * * page 9, line 27 - page 10, line 4 * | 1,4 | A 23 D |

The present search report has been drawn up for all claims

| Place of search | Date of completion of search | Examiner |
|---|---|---|
| The Hague | 18 February 91 | VUILLAMY V.M.L. |